# EUROPEAN PATENT SPECIFICATION

(11) **EP 2 930 705 B1**
(45) Date of publication and mention of the grant of the patent: **30.08.2017**
(21) Application number: 15162085.3
(22) Date of filing: 31.03.2015
(51) Int. Cl.: G08C 17/02

(54) **METHOD AND APPARATUS FOR CONTROLLING SMART TERMINAL**
VERFAHREN UND VORRICHTUNG ZUR STEUERUNG EINES INTELLIGENTEN ENDGERÄTS
PROCÉDÉ ET APPAREIL POUR COMMANDER UN TERMINAL INTELLIGENT

(30) Priority: 08.04.2014 CN 201410138935
(43) Date of publication of application: 14.10.2015
(73) Proprietor: Xiaomi Inc., Beijing 100085 (CN)
(72) Inventor: Zhang, Pengfei, 100085 Haidian District (CN); Xia, Yongfeng, 100085 Haidian District (CN); Fan, Jialin, 100085 Haidian District (CN); Chen, Yong, 100085 Haidian District (CN); Qu, Heng, 100085 Haidian District (CN)
(74) Representative: Reeve, Nicholas Edward

(56) References cited:
- US-A1- 2005 094 610
- US-A1- 2011 309 933
- US-A1- 2012 065 802

## Description

### TECHNICAL FIELD

The present disclosure generally relates to the technical field of smart homes, and more particularly, to a method and an apparatus for controlling a smart terminal.

### BACKGROUND

In related technologies of Smart Home, a remote control device for smart terminals in Smart Home is an important and widely used product and can integrate many functions for controlling all the electric appliances. The remote control device needs to control all the smart terminals in the smart home and thus has a lot of keys, each of which is corresponding to controlling of a certain smart terminal under a certain scenario. Due to so many keys, in a circuit implementation, the backside of each key generally is connected to many circuits and a series of operations will be triggered when any key is pressed.

Due to so many keys on the remote control device, users need to clearly know the operations which can be triggered by respective keys on the remote control device during usage. Thus, it is inconvenient for a user to operate and easily to get misoperations due to complicated usage of the remote control device. In addition, each scenario and each smart terminal respectively have corresponding keys, and thus it is complicated to perform addition, modification or deletion on the controlling strategy of a smart terminal.

US2005/0094610 discloses a controller location determination system and method. Signal responses having a unique ID are sent to the controller to determine its location. Location definitions associated with the unique ID may be used by programming in the controlling device to recall saved device states, commands sets, and macros.

US2011/0309933 discloses a technique for a control device to determine its relevant location within a home based on the reception of signals emitted by other devices. The location may be used for any purpose, such as adjusting a setting on the device.

US2012/0065802 discloses a system for controlling equipment in a building based on the current user location and the time of day.

### SUMMARY OF THE INVENTION

In order to overcome the problem existing in the related technologies, embodiments of the present disclosure provides a method and an apparatus for controlling a smart terminal.

The invention is defined in the independent claims. Advantageous features are set forth in the dependent claims.

According to a first aspect of embodiments of the present disclosure, a method for controlling a smart terminal is provided. The method includes: a first smart terminal currently around a local terminal is determined; and when the first smart terminal is located in a predetermined safe region according to a predetermined parameter setting, a parameter control instruction is sent to a predetermined second smart terminal, wherein the predetermined second smart terminal is one or more smart electrical appliances;. Wherein sending a parameter control instruction to the predetermined second smart terminal according to a predetermined parameter setting, when the first smart terminal is located in a predetermined safe region comprises: when the first smart terminal is located in the predetermined safe region, sending the parameter control instruction to the predetermined second smart terminal according to current time information and current environment information.

The technical solution provided by embodiments of the present disclosure may include the following advantageous effects. By obtaining the position of the smart terminal, the smart terminal is automatically controlled according to the preset controlling rules. Thus, the user may more easily and accurately control the smart terminals in a smart home, and may have a better experience of the smart home.

In another embodiment, determining a smart terminal currently around a terminal includes: a detection signal is sent to surroundings; a response signal returned from the smart terminal according to the detection signal is received; and a distance between the smart terminal and the local terminal and a type of the smart terminal are determined according to the response signal returned from the smart terminal.

In another embodiment, when the smart terminal is located in a predetermined safe region, sending a parameter control instruction to a predetermined smart terminal according to a predetermined parameter setting includes: when the smart terminal is located in the predetermined safe region, a predetermined operation corresponding to the smart terminal is located; and the parameter control instruction is sent to the predetermined smart terminal corresponding to the predetermined operation.

In another embodiment, it may be preset that predetermined operations for controlling the smart terminal itself are performed when the smart terminal is located in a certain position, or predetermined operations for controlling other smart terminals may be performed according to the position of the smart terminal. Thus, the control to the smart terminals in the home becomes more convenient and faster and may meet users' actual requirements, and therefore users may have better experience on the smart home without too many operations.

In another embodiment, determining a smart terminal currently around a local terminal includes: a relative position of the local terminal in a space is detected; and the smart terminal currently around the local terminal is determined according to a fixed position of the smart terminal in the space.

A device close to human body or a mobile terminal detects its own position and the positions of other smart terminals so as to determine the smart terminal currently around the local terminal. Thus, position detection and determination of the surrounding smart terminals become more convenient and faster.

In another embodiment, detecting a relative position of the terminal in a space includes: a locating signal is sent to a routing device providing network resources for the terminal and all smart terminals; and the relative position of the terminal in the space returned from the routing device is received. The relative position includes a position with respect to the routing device and/or a position with respect to one or more of the smart terminals.

The positions of the device close to human body or the mobile terminal may also be detected by a router, and this solution is more convenient and accurate. Furthermore, the functions of the device close to human body are reduced and thus the size of the device close to human body may be decreased. Consequently, the device close to human body becomes easier to carry, user's operations are less and simpler and cost of the device close to human body is lowered.

In another embodiment, determining the smart terminal currently around the local terminal according to a fixed position of the smart terminal in the space includes: when the relative position of the terminal in the space is the position with respect to the routing device, the smart terminal currently around the local terminal is determined according to fixed positions of the smart terminal and the routing device in the space; when the relative position of the terminal in the space is the position with respect to the smart terminal, the smart terminal currently around the local terminal is determined according to a distance between each of the smart terminals and the local terminal.

Since the positions of the smart electric appliances and the router in a home are generally fixed, for an unfixed device such as the device close to human body and the mobile terminal, the smart terminal currently around the local terminal may be determined according to the position with respect to the router or the position with respect to other smart electric appliances. Thus, the determination of surrounding smart terminals becomes simpler and faster.

In another embodiment, determining the smart terminal currently around the local terminal according to a fixed position of the smart terminal in the space includes: after the locating signal is sent to the routing device, a confirmation response returned from the routing device is received. The confirmation response includes information regarding the smart terminal currently around the local terminal.

Since the router may obtain positions of all the smart terminals in a home, determination of the smart terminal currently around any smart terminal in the home may be performed by the router. Thus, the solution becomes simpler and more accurate. Furthermore, the functions of the device close to human body (such as a wristwatch) are reduced and thus the size of the device close to human body may be decreased. Consequently, the device close to human body becomes easier to carry, user's operations are less and simpler and cost of the device close to human body is lowered.

Not only the position of the smart terminal but also the environment information may be considered, and thus the control on the smart terminals in a home may become more accurate and better meet users' actual requirements, and thereby users' experience on the smart home is further improved.

In another embodiment, the method further includes: a control action of sending the parameter control instructions to the predetermined second smart terminal is recorded;; the parameter control instruction is sent to the smart terminal or the predetermined smart terminal according to the recorded control action.

Thus, various control actions may be learned so as to be used as a basis for next controlling on the smart terminals. Thus, the control on the smart terminals may better comply with users' actions and habits and with the users' actual requirements, and thus the users may have better experience on the smart home.

According to a second aspect of embodiments of the present disclosure, an apparatus for controlling a smart terminal is provided. The apparatus includes: a determining module configured to determine that a first smart terminal is currently located around a local terminal; and an instruction sending module or a parameter setting module. The instruction sending module is configured, when the first smart terminal is located in a predetermined safe region, to send a parameter control instruction to the predetermined second smart terminal according to a predetermined parameter setting, wherein the predetermined second smart terminal is one or more smart electrical appliances. Wherein sending a parameter control instruction to predetermined second smart terminal according to a predetermined parameter setting, when the first smart terminal is located in a predetermined safe region comprises: when the first smart terminal is located in the predetermined safe region, sending the parameter control instruction to the predetermined second smart terminal according to current time information; and changing an own parameter setting according to a predetermined parameter setting, when the smart terminal is located in a predetermined safe region comprises: when the smart terminal is located in the predetermined safe region, changing the own parameter setting according to the current time information and current environment information.

In another embodiment, the determining module includes: a sending unit configured to send a detection signal to surroundings; a receiving unit configured to receive a response signal returned from the smart terminal according to the detection signal; an analyzing unit configured to determine a distance between the smart terminal and the terminal and a type of the smart terminal according to the response signal returned from the smart terminal.

In another embodiment, the instruction sending module includes: an obtaining unit configured, when the smart terminal is located in the predetermined safe region, to obtain a predetermined operation corresponding to the smart terminal; and a sending unit configured to send the parameter control instruction to the predetermined smart terminal corresponding to the predetermined operation.

In another embodiment, the determining module includes: a detecting unit configured to detect a relative position of the terminal in a space; and an analyzing unit configured to determine the smart terminal currently around the local terminal according to a fixed position of the smart terminal in the space.

The detecting unit is configured to send a locating signal to a routing device providing network resources for the terminal and all smart terminals and to receive the relative position of the local terminal in the space returned from the routing device. The relative position includes a position with respect to the routing device and/or a position with respect to one or more of the smart terminals.

In another embodiment, the analyzing unit is configured, when the relative position of the terminal in the space is the position with respect to the routing device, to determine the smart terminal currently around the local terminal according to fixed positions of the smart terminal and the routing device in the space. The analyzing unit is configured, when the relative position of the terminal in the space is the position with respect to the smart terminal, to determine the smart terminal currently around the local terminal according to a distance between each of the smart terminals and the local terminal.

In another embodiment, the analyzing unit is configured, after the locating signal is sent to the routing device, to receive a confirmation response returned from the routing device. The confirmation response includes information regarding the smart terminal currently around the local terminal.

In another embodiment, the apparatus further includes: a recording module configured to record a control action of sending the parameter control instructions to the predetermined second smart terminal; the instruction sending module configured to send the parameter control instruction to the predetermined second smart terminal according to the recorded control action. According to a third aspect of the present embodiment, an apparatus for controlling a smart terminal is provided. The apparatus is applied in a smart home and includes: a processor; and a memory for storing instructions executable by the processor. The processor is configured to: determine that a first smart terminal is currently located around a local terminal; and send a parameter control instruction to the predetermined second smart terminal. Wherein sending a parameter control instruction to the predetermined second smart terminal according to a predetermined parameter setting, when the first smart terminal is located in a predetermined safe region comprises: when the first smart terminal is located in the predetermined safe region, sending the parameter control instruction to the predetermined second smart terminal according to current time information and current environment information.

According to a fourth aspect of the present embodiment, a computer program is provided, which when executing on a processor of apparatus, performs the above methods.

It is to be understood that both the foregoing general description and the following detailed description are exemplary and explanatory only and are not restrictive of the invention, as claimed.

The technical solution of the present disclosure will be described below in more detail with reference to drawings and embodiments.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for controlling a smart terminal according to an exemplary embodiment.
Fig. 2 is a flow chart showing determining a smart terminal currently around a local terminal according to an exemplary embodiment.
Fig. 3 is a block diagram showing positions of smart terminals according to another exemplary embodiment.
Fig. 4 is a flow chart showing determining a smart terminal currently around a local terminal according to another exemplary embodiment.
Fig. 5 is a flow chart showing a method for controlling a smart terminal according to another exemplary embodiment.
Fig. 6 is a flow chart showing a method for controlling a smart terminal according to another exemplary embodiment.
Fig.7 is a flow chart showing a method for controlling a smart terminal according to another exemplary embodiment.
Fig. 8 is a flow chart showing a method for controlling a smart terminal according to another exemplary embodiment.
Fig. 9 is block diagram showing an apparatus for controlling a smart terminal according to an exemplary embodiment.
Fig. 10 is a block diagram showing a determining module according to an exemplary embodiment.
Fig. 11 is a block diagram showing an instruction sending module according to an exemplary embodiment.
Fig. 12 is a block diagram showing a determining module according to an exemplary embodiment.
Fig. 13 is a block diagram showing an apparatus for controlling a smart device according to an exemplary embodiment.
Fig. 14 is a block diagram showing a router according to an exemplary embodiment.

Specific embodiments in this disclosure have been shown by way of example in the foregoing drawings and are hereinafter described in detail. The figures and written description are not intended to limit the scope of the concepts of the present disclosure in any manner. Rather, they are provided to illustrate the concepts of the present disclosure to one of ordinary skill in this art with reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Respective embodiments in the present disclosure can be applied in various smart terminals, for example, a device close to human body such as a wristwatch or a bracelet, a mobile terminal such as a mobile phone or a tablet computer, a router, or a smart electric appliance such as a smart television or a smart refrigerator. The device close to human body can detect and control other smart terminals in an infrared manner, such as by using an Infrared signal. The mobile terminal or the router can detect or control other smart terminals in a WiFi manner, such as by connecting with a WiFi communication protocol.

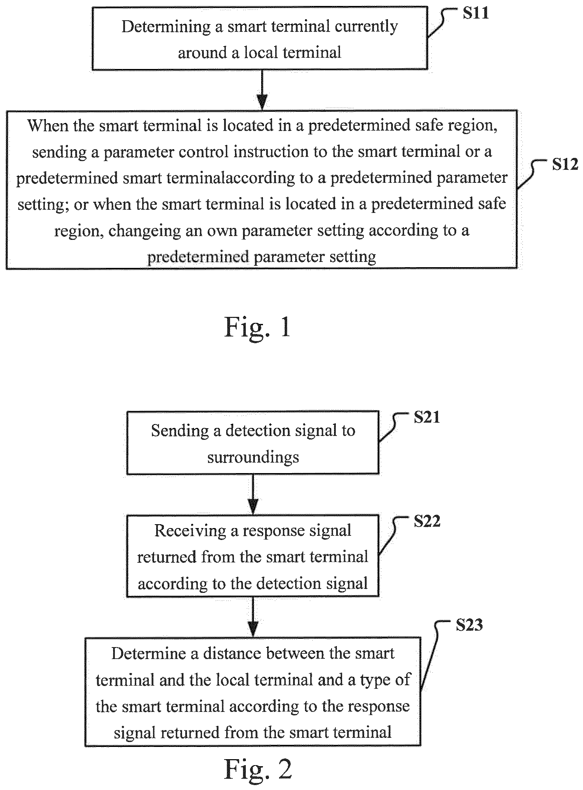

Fig 1. is a flow chart showing a method for controlling a smart terminal according to an exemplary embodiment. As shown in Fig. 1, the method for controlling a smart terminal can be applied in various smart terminals, and can include the following steps.

In step S11, a smart terminal currently around a local terminal is determined.

In step S12, when the smart terminal is located in a predetermined safe region, a parameter control instruction is sent to the smart terminal or a predetermined smart terminal according to a predetermined parameter setting, or an own parameter setting is changed according to a predetermined parameter setting.

For example, if the local terminal is a router, the router determines that the local terminal is located in a predetermined safe region by connecting a mobile phone to the local terminal, and at this time the router can perform predetermined operations to send a parameter control instruction to a predetermined smart terminal, for example, to control a light to be turned on, to control an air conditioner to be turned on or to control blinds to be closed; or the router can send a parameter control instruction to a mobile phone, for example, to unlock the mobile phone. The router can also judge whether a mobile phone reaches a predetermined safe region according to location information continuously reported by the mobile phone.

As another example, if the local terminal is a mobile phone, the mobile phone detects a router in a home. Since the home belongs to a relatively privacy region and thus can be determined as the predetermined safe region. Thus, the mobile phone is located in the predetermined safe region and changes the own parameter setting according to the predetermined parameter setting, for example, hidden information in the mobile phone is changed into displayed information.

As another example, if the local terminal is a wearable device (such as a bracelet) wore by a user, operations of a smart terminal (such as starting of the smart terminal) can be controlled by detecting the smart electric appliances. For example, when a user wearing a bracelet walks in front of a television, the bracelet detects the television and then sends a starting instruction to the television. When a plurality of smart terminals is detected, starting of the plurality of smart terminals can be controlled. Or, it can be determined according to the distance between the smart terminal and the bracelet that the starting instruction is sent to which smart terminal. As another example, if the local terminal is a device close to human body such as a wristwatch, the device can send the parameter control instruction to a mobile phone for unlocking screen when detecting that the distance from the mobile phone to the terminal is within a safe range. Accordingly, if the local terminal is a mobile phone, the mobile phone can change its own parameter setting when detecting that the distance from the predetermined device (such as the smart bracelet) to the local terminal is within a safe range.

In some embodiments, the smart terminal is automatically controlled according to the preset control rules by obtaining the position of the smart terminal. Thus, a user can more easily and accurately control the smart terminal in the smart home, and thus can have a better experience of the smart home.

Fig. 2 is a flow chart showing determining some smart terminals currently around a terminal X according to an exemplary embodiment. As shown in Fig. 2, in some embodiments, step 11, i.e., to determine a smart terminal currently around a terminal, can include the following steps.

In step S21, a detection signal is sent by the terminal X to surroundings.

In step S22, a response signal returned from a smart terminal according to the detection signal is received.

In step S23, a distance between the smart terminal and the terminal X and type of the smart terminal are determined according to the response signal returned from the smart terminal.

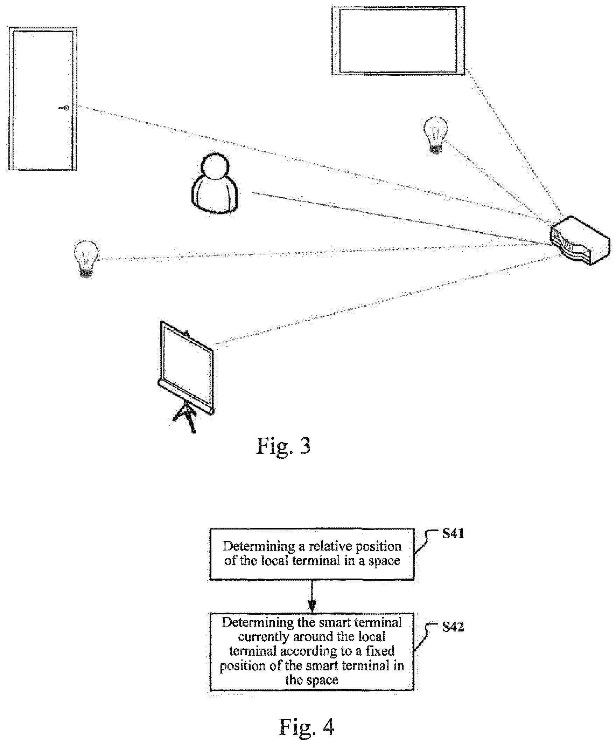

For example, as shown in Fig. 3, a router can send a detection signal to a smart terminal (such as a smart blinds, a smart door, a smart television, a smart light) at home in a electromagntic radiation manner, such as by wireless communication. After receiving the detection signal, the smart terminal can return a response signal to the router. According to the received response signal, the router can determine a distance between the smart terminal and the router itself, and can determine the type of the smart terminal. For example, the router can determine the type of the smart terminal by determining a port number or some port numbers of the smart terminal. A device close to user such as a wristwatch or a bracelet and a mobile terminal can determine the smart terminal currently around the local terminal by such manner.

In some embodiments, step S12 includes: a router or a mobile terminal obtains a predetermined operation corresponding to the smart terminal when the smart terminal is located in the predetermined safe region; and the parameter control instruction is sent to the predetermined smart terminal corresponding to the predetermined operation.

Generally, a mobile terminal such as a mobile phone or a device close to human body such as a wristwatch is carried by a user, and a position of the user can be considered as a position of the mobile terminal or the device close to human body.

In an application scenario, when a router detects that a mobile phone is located at a position in a home, for example in a sitting-room, a predetermined operation corresponding to the mobile phone is obtained. When detecting that a user with the mobile phone is in the sitting-room, the router obtains which smart electric appliances need to be controlled to perform operations under such scenario. For example, the router sends a parameter control instruction to a smart television to control the smart television on. Additionally, there can be two or more predetermined smart terminals corresponding to the predetermined operation.

In some embodiments, it can be preset that when the smart terminal is located in a certain position, predetermined operations for controlling the smart terminal itself are performed, or predetermined operations for controlling other smart terminals can be performed according to the position of the smart terminal. Thus, the control for the smart terminals in the home becomes more convenient and faster and can meet users' actual requirements, and thus users can have better experience on the smart home without too many operations.

Fig. 4 is a flow chart showing determining a smart terminal currently around the local terminal according to another exemplary embodiment. As shown in Fig. 4, for an unfixed device such as a device close to human body and a mobile terminal, step 11, i.e., to determine a smart terminal currently around the local terminal, can include the following steps.

In step S41, a relative position in a space of a local terminal in a space is determined.

In step S42, a smart terminal currently around the local terminal is determined according to a fixed position of the smart terminal in a same space.

For example, with reference to Fig. 3, it is assumed that a user wearing a wristwatch walks in a room, the wristwatch detects its own relative position in the space. For a device having a fixed position such as a router or smart electric appliances, the wristwatch determines the smart terminal currently around the wristwatch according to the detected fixed positions of the router and the smart electric appliances. Additionally, the router can also determine the smart terminal currently around itself by the same manner. The router and the smart electric appliances have relatively fixed positions, and thus the relative position or the fixed position can be determined only once.

In another embodiment, a device close to human body or a mobile terminal detects its own the position and the positions of other smart terminals so as to determine the smart terminal currently around the local terminal. Thus, position detection and determination of the surrounding smart terminals become more convenient and faster.

In another embodiment, for a unfixed device such as a device close to human body and a mobile terminal, step S41, i.e., to detect a relative position of a local terminal in a space can include the following steps: a locating signal is sent to a routing device providing network resources for the local terminal and all smart terminals; and the relative position of the local terminal in the space returned from the routing device is received. The relative position includes a position with respect to the routing device and/or a position with respect to one or more of the smart terminals.

For example, a wristwatch can send a locating signal to a router in a home. After receiving the locating signal, the router can determine the relative position of the wristwatch in the home in the manner as shown in Fig. 2, and return the relative position back to the wristwatch. Thus, the wristwatch can obtain its own relative position in the home.

In another embodiment, the positions of the device close to human body or of the mobile terminal can also be detected by the router, which is more convenient and accurate. Furthermore, the functions of the device close to human body are reduced and thus the size of the device close to human body can be decreased. Consequently, the device close to human body is easier to carry, user's operations are less and simpler and cost of the device close to human body is lowered.

In another embodiment, for an unfixed device such as a device close to human body and a mobile terminal, according to a fixed position of the smart terminal in the space, step S42, i.e., to determine the smart terminal currently around the local terminal, can include: when the relative position of the local terminal in the space is the position with respect to the routing device, the smart terminal currently around the local terminal is determined according to with fixed positions of the smart terminal and the routing device in the space; and when the relative position of the local terminal in the space is the position with respect to the smart terminal, the smart terminal currently around the local terminal is determined according to a distance between each of the smart terminals and the local terminal.

For example, the wristwatch can determine a smart electric appliance currently around the wristwatch according to a position of the wristwatch itself with respect to the router and fixed positions of smart electric appliances and the router. Or, the wristwatch can determine the smart electric appliance currently around the wristwatch according to a position of the wristwatch itself with respect to the smart electric appliances and the distance from each of the electric appliances.

Since the positions of the smart electric appliances and the router in a home are generally fixed, for an unfixed device such as the device close to human body and the mobile terminal, the smart terminal currently around the local terminal can be determined according to the position with respect to the router or the position with respect to other smart electric appliances. Thus, the determination of surrounding smart terminals becomes simpler and faster.

In another embodiment, devices around other smart terminals can be determined by the router. Step S42, i.e., to determine the smart terminal currently around the local terminal according to a fixed position of the smart terminal in the space, can include: a confirmation response returned from the routing device is received after the locating signal is sent to the routing device, wherein the confirmation response includes information regarding the smart terminal currently around the local terminal.

For example, a wristwatch sends a locating signal to a router; after receiving the locating signal, the router determines the smart electric appliances currently around the wristwatch according to the relative position of the wristwatch in the home and the fixed positions of the other smart electric appliances in the home or the positions of the other smart electric appliances with respect to the router, and sends a confirmation response including information regarding the smart electric appliances currently around the wristwatch to the wristwatch.

Since the router can obtain positions of all the smart terminals in a home, determination of the smart terminal currently around any smart terminal in the home can be performed by the router, which is simpler and more accurate. Furthermore, the functions of the device close to human body (such as a wristwatch) are reduced and thus the size of the device close to human body can be decreased. Consequently, the device close to human body becomes easier to carry, user's operations are less and simpler and cost of the device close to human body is lowered.

Due to a large number of indoor smart terminals, for example, a light, an air conditioner, a television, a loud speaker, a blinds and so on are disposed in a sitting-room, and a light, an air conditioner, a television and a blinds and so on are disposed in a bedroom, if it is determined which smart terminals need to be controlled to perform operations only according to positions of the smart terminals, users' requirements can not be met. For example, when it is detected that a mobile phone is in a bedroom at 23:00, the user can not want to turn on the light or the television; when the temperature of the sitting-room is 30°C, the user can prefer to turn on the air conditioner but not want to turn on the television or the loud speaker. Thus, time and environment shall be considered in control of the smart terminals.

According to another embodiment, in step S12, when the smart terminal is located in the predetermined safe region, the parameter control instruction is sent to the smart terminal or the predetermined smart terminal according to current time and/or environment information; or when the smart terminal is located in the predetermined safe region, own parameter setting is changed according to the current time and/or environment information.

The environment information can include indoor temperature, humidity, brightness, noise value, and so on.

For example, when it is detected that the mobile phone is in the sitting-room, if the current time is 20:00, the device close to human body or the router can send an instruction to the light in the sitting-room to control the light on. Or, when it is detected that the temperature of the sitting-room is 30°C, the device close to human body or the router can send an instruction to the air conditioner in the sitting-room to control the air conditioner on. Or, when it is detected that the mobile phone is in the sitting-room, if the current time is 8:30 and the temperature in the sitting-room is 28°C, the air conditioner in the sitting-room is not turned on considering that the user needs to leave home to go work. Or, when it is detected that the mobile phone is in the bedroom, if the current time is 23:00 and the temperature in the bedroom is 30°C, the light in the bedroom is turned off and the air conditioner in the bedroom is turned on. Or, when it is detected that the mobile phone is in the bedroom, if the current time is 23:00, the mobile phone can automatically set itself to be in a mute state.

According to the current time and/or environment information, different settings can be applied in different scenarios, and detailed descriptions thereof are omitted.

Thus, not only the position of the smart terminal but also current time and/or environment information can be considered, and thus the control on the smart terminals in a home can become more accurate and better meet users' actual requirements, and thus users' experience on the smart home is further improved.

According to another embodiment, the method for controlling smart terminals can also include the following steps.
a control action of sending the parameter control instruction to the smart terminal or the predetermined smart terminal is recorded; or a control action of changing the own parameter setting according to the predetermined parameter setting is recorded.
the parameter control instruction is sent to the smart terminal or the predetermined smart terminal according to the recorded control action, or the own parameter setting is changed according to the recorded control action.

For example, it is recorded that the television and the light are usually turned on when the mobile terminal is in the sitting-room at 20:00, through recording the control action. Thus, when it is detected again that the mobile phone is in the sitting-room at 20:00, the parameter control instruction is sent to the television and the light. Or, it is recorded that the mobile phone is usually set to be in a mute state when it is detected that the mobile phone is in the bedroom at 23:00, through recording the control actions. Thus, when it is detected again that the mobile phone is in the bedroom at 23:00, the own parameter settings of the mobile phone are changed.

The recorded control actions can at least include the controlled smart terminal and control time in each control.

Various control actions can be learned so as to be used as a basis for next controlling on the smart terminals. Thus, the control on the smart terminals can better comply with users' actions and habits and with the users' actual requirements, and thus the users can have better experience on the smart home.

Several actual application scenarios of the embodiments of the present disclosure will be described below in detail.

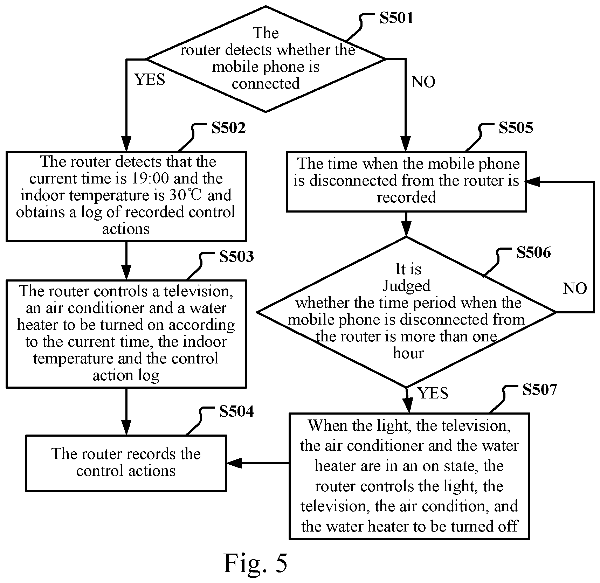

Fig. 5 is a flow chart showing a method for controlling a smart terminal according to an exemplary embodiment. As shown in Fig. 5, according to some embodiments, a router controls smart electric appliances to perform predetermined operations by determining whether a mobile phone is connected to or disconnected from the routing.

In step S501, the router detects whether the mobile phone is connected. If the detection result is yes, step 502 is performed. If the detection result is no, step 505 is performed.

In step S502, the router detects that the current time is 19:00 and the indoor temperature is 30°C and obtains a log of recorded control actions.

In step S503, the router controls a television, an air conditioner and a water heater to be turned on according to the current time, the indoor temperature and the control action log.

In step S504, the router records the control actions and the flow chart ends.

In step S505, the time when the mobile phone is disconnected from the router is recorded.

In step S506, whether the time period when the mobile phone is disconnected from the router is more than one hour is judged. If the judgment result is yes, step S507 is performed; If the judgment result is no, step S505 is performed.

In step S507, when the light, the television, the air conditioner and the water heater are still in the on sate, the router controls the light, the television, the air condition, and the water heater to be turned off, and then step S504 is performed.

The router judges whether a user arrives at home or leaves home by judging whether the mobile phone is connected to or disconnected from the routing, and thus sends a parameter control instruction to the smart electric appliances in the home according to predetermined parameter settings so as to control the smart electric appliances to perform predetermined operations.

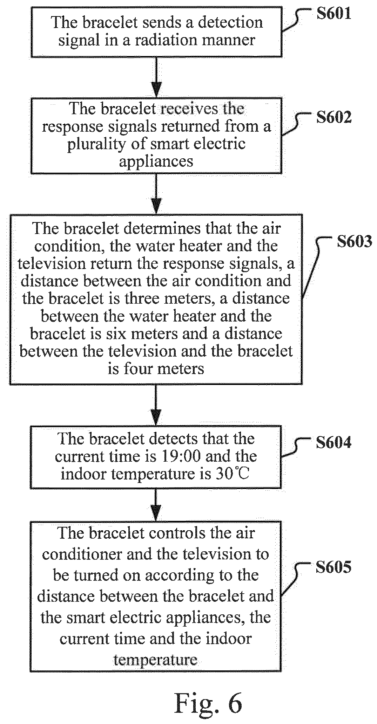

Fig. 6 is a flow chart showing a method for controlling a smart terminal according to another exemplary embodiment. As shown in Fig. 6, in some embodiments, a device close to human body such as a bracelet or a wristwatch controls surrounding smart electric appliances to perform predetermined operations according to predetermined parameter settings.

In step S601, the bracelet sends a detection signal in an electromagnetic radiation manner.

In step S602, the bracelet receives the response signals returned from a plurality of smart electric appliances.

In step S603, the bracelet determines that the air condition, the water heater and the television return the response signals, a distance between the air condition and the bracelet is three meters, the distance between the water heater and the bracelet is six meters and the distance between the television and the bracelet is four meters.

In step S604, the bracelet detects that the current time is 19:00 and the indoor temperature is 30°C.

In step S605, the bracelet controls the air conditioner and the television to be turned on according to the distance between the bracelet and the smart electric appliances, the current time and the indoor temperature.

In this embodiment, the bracelet can control which smart electric appliance to be turned on according to at least one parameter of the distance between the bracelet and the smart electric appliances, the current time and the indoor temperature. Additionally, other factors can be used as the basis for controlling which smart electric appliances to be turned on.

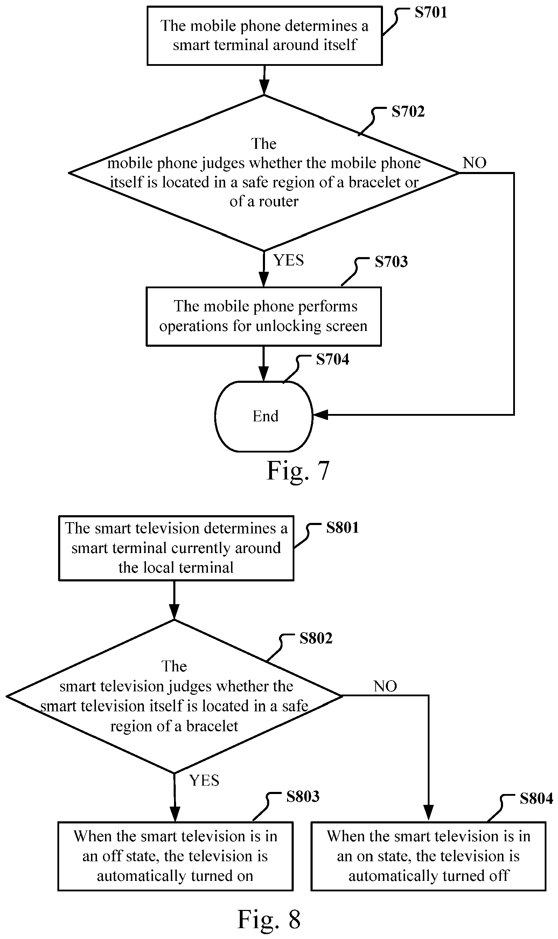

Fig. 7 is a flow chart showing a method for controlling a smart terminal according to another exemplary embodiment. As shown in Fig. 7, in some embodiments, when a mobile phone detects that the mobile phone itself is located in a safe region of a device close to human body such as a bracelet or a wristwatch, or a router, the mobile phone changes its own parameter settings to perform predetermined operations.

In step S701, the mobile phone determines a smart terminal around itself.

In step S702, the mobile phone judges whether itself is located in a safe region of a bracelet or a router. If the judgment result is yes, step S703 is performed. If the judgment result is no, step S704 is performed.

In step S703, the mobile phone performs operations for unlocking screen.

In step S704, the flow chart ends.

When the mobile bracelet is located in a safe region of the bracelet, i.e., the user carrying the bracelet contacts the mobile phone, the mobile phone can automatically perform operations for unlocking screen to facilitate the user. In addition, when the mobile phone is located in a safe region of the router, i.e., the user carrying the mobile phone has arrived at home, the mobile phone can change its other own settings in addition to unlocking screen. For example, for some micropayments, it can be set that the payments can be finished without entering password by the user. Or, some hidden personal information in the mobile phone such as work plan or contact information can be displayed.

Fig. 8 is a flow chart of a method for controlling a smart terminal according to another exemplary embodiment. As shown in Fig. 8, in some embodiments, when a smart television detects that the smart television itself is located in a safe region of a device close to human body such as a bracelet, the smart television changes its own parameter settings.

In step S801, the smart television determines a smart terminal currently around the local terminal.

In step S802, the smart television judges whether the smart television itself is located in a safe region of a bracelet. If the judgment result is yes, step S803 is performed. If the judgment result is no, step S804 is performed.

In step S803, when the smart television is in an off state, the television is automatically turned on, and the flow chart ends.

In step S804, when the smart television is in an on state, the television is automatically turned off, and the flow chart ends.

The device close to human body is usually carried by a user, and the smart electric appliances such as a smart television can judge whether the user is around the television according to the position with respect to the device close to human body so as to perform operations of automatic on or off.

The application scenarios of the method for controlling a smart terminal of the present disclosure are not limited to the above scenarios. Considering various scenarios, respective smart terminals in a smart home can be comprehensively set, so as to more accurately control the smart terminals in the smart home, and to better meet users' actual requirements, and thus the experience of users on the smart home is further improved.

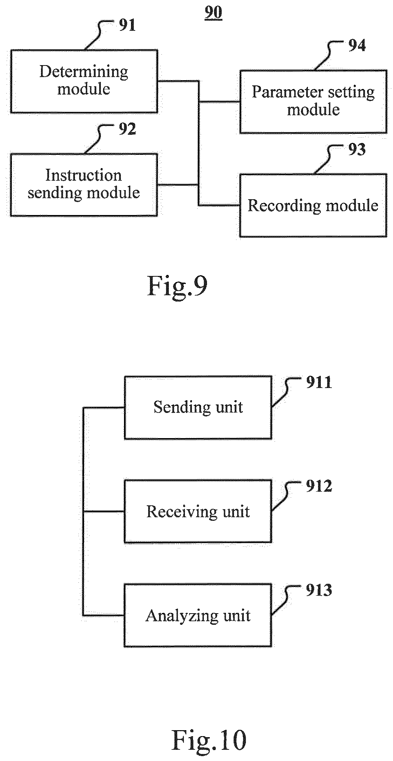

Fig. 9 is a block diagram showing an apparatus for controlling a smart terminal according to an exemplary embodiment. As shown in Fig. 9, the apparatus includes: a determining module 91, and an instruction sending module 92 or a parameter setting module 93. The determining module 91 configured to determine a smart terminal currently around a local terminal. The instruction sending module 92 configured, when the smart terminal is located in a predetermined safe region, to send a parameter control instruction to the smart terminal or a predetermined smart terminal according to a predetermined parameter setting. The parameter setting module 93 configured when the smart terminal is located in a predetermined safe region, to change own parameter setting according to a predetermined parameter setting.

Fig. 10 is a block diagram of a determining module according to an exemplary embodiment. As shown in Fig. 10, in another embodiment, the determining module 91 includes: a sending unit 911 configured to send a detection signal to surroundings; a receiving unit 912 configured to receive a response signal returned from the smart terminal according to the detection signal; an analyzing unit 913 configured to determine a distance between the smart terminal and the local terminal and a type of the smart terminal according to the response signal returned from the smart terminal.

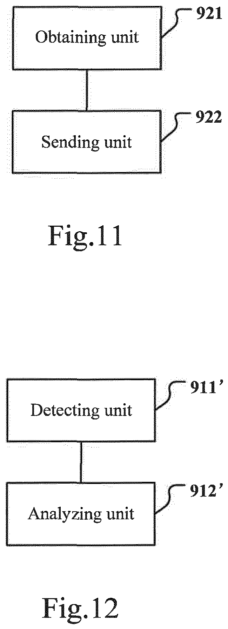

Fig. 11 is a block diagram of an instruction sending module according to an exemplary embodiment. As shown in Fig. 11, in another embodiment, the instruction sending module 92 includes: an obtaining unit 921 configured, when the smart terminal is located in the predetermined safe region, to obtain a predetermined operation corresponding to the smart terminal; and a sending unit 922 configured to send the parameter control instruction to the predetermined smart terminal corresponding to the predetermined operation.

Fig. 12 is a block diagram of a determining module according to an exemplary embodiment. As shown in Fig. 12, in another embodiment, the determining module 91 includes: a detecting unit 911' configured to detect a relative position of the local terminal in a space; an analyzing unit 912' configured to determine the smart terminal currently around the local terminal according to a fixed position of the smart terminal in the space.

In another embodiment, the detecting unit 911' is configured to send a locating signal to a routing device providing network resources for the local terminal and all smart terminals and receive the relative position of the local terminal in the space returned from the routing device. The relative position includes a position with respect to the routing device and/or a position with respect to one or more of the smart terminals.

In another embodiment, the analyzing unit 912' is configured, when the relative position of the terminal in the space is the position with respect to the routing device, to determine the smart terminal currently around the local terminal according to fixed positions of the smart terminal and the routing device in the space. The analyzing unit 912' is configured, when the relative position of the terminal in the space is the position with respect to the smart terminal, to determine the smart terminal currently around the local terminal according to a distance between each of the smart terminals and the terminal.

In another embodiment, the analyzing unit 912' is configured, after the locating signal is sent to the routing device, to receive a confirmation response returned from the routing device. The confirmation response includes information regarding the smart terminal currently around the local terminal.

In another embodiment, the instruction sending module 92 is configured, when the smart terminal is located in the predetermined safe region, to send the parameter control instruction to the smart terminal or the predetermined smart terminal according to current time and/or environment information.

The parameter setting module 93 is configured, when the smart terminal is located in the predetermined safe region, to change the own parameter setting according to the current time and/or environment information.

In another embodiment, the apparatus 90 further includes the following modules.

A recording module 94 is configured to record a control action of sending the parameter control instruction to the smart terminal or the predetermined smart terminal, or to record a control action of changing the own parameter setting according to the predetermined parameter setting.

The instruction sending module 92 is configured to send the parameter control instruction to the smart terminal or the predetermined smart terminal according to the recorded control action.

The parameter setting module 93 is configured to change the own parameter setting according to the recorded control action.

With respect to the apparatus in the above embodiments, specific operations performed by respect modules have been described in detail in embodiments of related method, and detailed description thereof are omitted here.

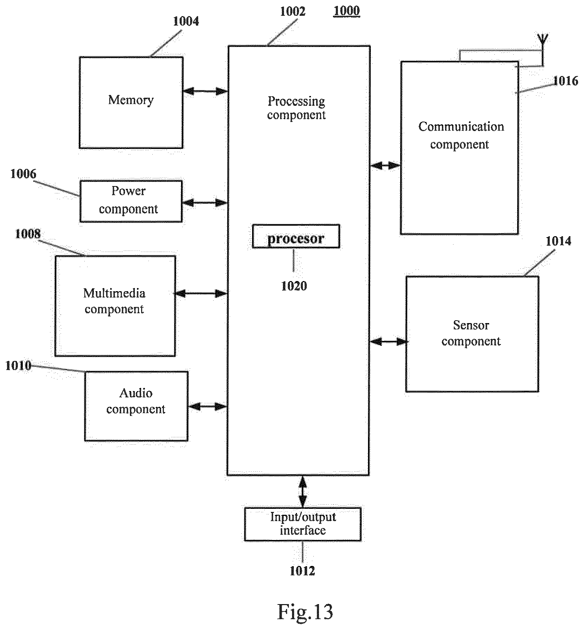

Fig. 13 is a block diagram of an apparatus for controlling a smart terminal according to an exemplary embodiment. For example, the apparatus 1000 can be a mobile phone, a computer, a digital broadcast terminal, a messaging device, a gaming console, a tablet, a medical device, exercise equipment, a personal digital assistant, and the like.

Referring to Fig. 13, the apparatus 1000 can include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the apparatus 1000, such as the operations associated with display, telephone calls, data communications, camera operations, and recording operations. The processing component 1002 can include one or more processors 1020 to execute instructions to perform all or part of the steps in the above described methods. Moreover, the processing component 1002 can include one or more modules which facilitate the interaction between the processing component 1002 and other components. For instance, the processing component 1002 can include a multimedia module to facilitate the interaction between the multimedia component 1008 and the processing component 1002.

The memory 1004 is configured to store various types of data to support the operation of the apparatus 1000. Examples of such data include instructions for any applications or methods operated on the apparatus 1000, contact data, phonebook data, messages, pictures, video, etc. The memory 1004 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the apparatus 1000. The power component 1006 can include a power management system, one or more power sources, and any other components associated with the generation, management, and distribution of power in the apparatus 1000.

The multimedia component 1008 includes a screen providing an output interface between the apparatus 1000 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 1008 includes a front camera and/or a rear camera. The front camera and the rear camera can receive an external multimedia datum while the apparatus 1000 is in an operation mode, such as a photographing mode or a video mode. Each of the front camera and the rear camera can be a fixed optical lens system or have focus and optical zoom capability.

The audio component 1010 is configured to output and/or input audio signals. For example, the audio component 1010 includes a microphone ("MIC") configured to receive an external audio signal when the apparatus 1000 is in an operation mode, such as a call mode, a recording mode, and a voice recognition mode. The received audio signal can be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons can include, but are not limited to, a home button, a volume button, a starting button, and a locking button.

The sensor component 1014 includes one or more sensors to provide status assessments of various aspects of the apparatus 1000. For instance, the sensor component 1014 can detect an open/closed status of the apparatus 1000, relative positioning of components, e.g., the display and the keypad, of the apparatus 1000, a change in position of the apparatus 1000 or a component of the apparatus 1000, a presence or absence of user contact with the apparatus 1000, an orientation or an acceleration/deceleration of the apparatus 1000, and a change in temperature of the apparatus 1000. The sensor component 1014 can include a proximity sensor configured to detect the presence of nearby objects without any physical contact. The sensor component 1014 can also include a light sensor, such as a CMOS or CCD image sensor, for use in imaging applications. In some embodiments, the sensor component 1014 can also include an accelerometer sensor, a gyroscope sensor, a magnetic sensor, a pressure sensor, or a temperature sensor.

The communication component 1016 is configured to facilitate communication, wired or wirelessly, between the apparatus 1000 and other devices. The apparatus 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1000 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1004, executable by the processor 1020 in the apparatus 1000, for performing the above-described methods. For example, the non-transitory computer-readable storage medium can be a ROM, a RAM, a CD-ROM, a magnetic tape, a floppy disc, an optical data storage device, and the like.

A non-transitory computer-readable storage medium having stored therein instructions that, when executed by one or more processors of a mobile terminal, cause the mobile terminal to perform a method for controlling a smart terminal, which includes: determining a smart terminal currently around a local terminal; sending a parameter control instruction to the smart terminal or a predetermined smart terminal according to a predetermined parameter setting, when the smart terminal is located in a predetermined safe region; or changing an own parameter setting according to a predetermined parameter setting when the smart terminal is located in a predetermined safe region.

In another embodiment, the determining a smart terminal currently around a local terminal includes: sending a detection signal to surroundings; receiving a response signal returned from the smart terminal according to the detection signal; and determining a distance between the smart terminal and the terminal and a type of the smart terminal according to the response signal returned from the smart terminal.

In another embodiment, the sending a parameter control instruction to a predetermined smart terminal according to a predetermined parameter setting when the smart terminal is located in a predetermined safe region includes: obtaining a predetermined operation corresponding to the smart terminal when the smart terminal is located in the predetermined safe region; and sending the parameter control instruction to the predetermined smart terminal corresponding to the predetermined operation.

In another embodiment, the determining a smart terminal currently around a local terminal includes: detecting a relative position of the terminal in a space; and determining the smart terminal currently around the local terminal according to a fixed position of the smart terminal in the space.

In another embodiment, the detecting a relative position of the local terminal in a space includes: sending a locating signal to a routing device providing network resources for the terminal and all smart terminals; and receiving the relative position of the local terminal in the space returned from the routing device. The relative position includes a position with respect to the routing device and/or a position with respect to one or more of the smart terminals.

In another embodiment, the determining the smart terminal currently around the local terminal according to a fixed position of the smart terminal in the space includes: determining the smart terminal currently around the local terminal according to fixed positions of the smart terminal and the routing device in the space, when the relative position of the terminal in the space is the position with respect to the routing device; determining the smart terminal currently around the local terminal according to a distance between each of the smart terminals and the local terminal, when the relative position of the terminal in the space is the position with respect to the smart terminal.

In another embodiment, the determining the smart terminal currently around the local terminal according to a fixed position of the smart terminal in the space includes: receiving a confirmation response returned from the routing device after sending the locating signal to the routing device. The confirmation response includes information regarding the smart terminal currently around the local terminal.

In another embodiment, the sending a parameter control instruction to the smart terminal or a predetermined smart terminal according to a predetermined parameter setting when the smart terminal is located in a predetermined safe region includes: sending the parameter control instruction to the smart terminal or the predetermined smart terminal according to current time and/or environment information when the smart terminal is located in the predetermined safe region;

The changing an own parameter setting according to a predetermined parameter setting when the smart terminal is located in the predetermined safe region includes: changing the own parameter setting according to the current time and/or environment information when the smart terminal is located in the predetermined safe region.

In another embodiment, the method also includes: recording a control action of sending the parameter control instruction to the smart terminal or the predetermined smart terminal; or recording a control action of changing the self parameter setting according to the predetermined parameter setting; and sending the parameter control instruction to the smart terminal or the predetermined smart terminal according to the recorded control action, or changing the self parameter setting according to the recorded control action.

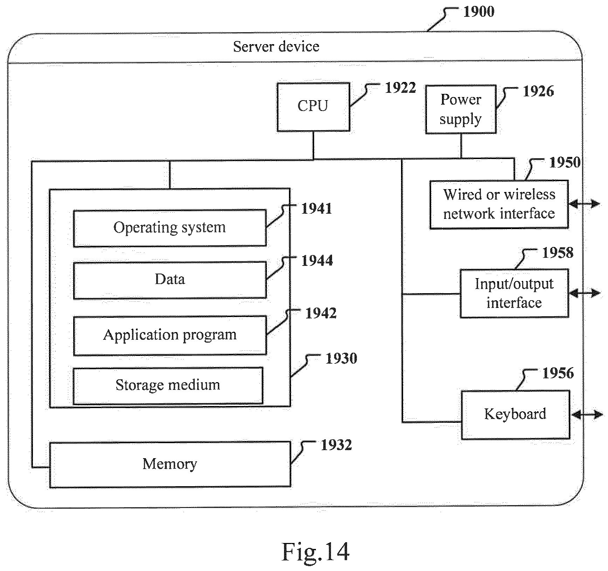

Fig. 14 is a block diagram showing a structure of a router according an embodiment of the present disclosure. The router 1900 can have relatively large differences due to different configurations or performances, and can include one or more Central Processing Units (CPUs) 1922 (for example, one or more processors), a memory 1932, and one or more storage mediums 1930 (for example, one or more mass storage devices) for storing application program 1942 or data 1944. The memory 1932 and the storage medium 1930 can perform temporary storage or permanent storage. The program stored in the storage medium 1930 can include one or more modules (not shown), and each module can include a series of instruction operations for the router. Further, the CPU 1922 can be configured to communicate with the storage medium 1930, and to perform on the router 1900 a series of instruction operations in the storage medium 1930.

The router 1900 can further include one or more power supplies 1926, one or more wired or wireless network interfaces 1950, one or more input/output interfaces 1958, one or more keyboards 1956 and/or one or more operating systems 1941, such as Windows ServerTM, Mac OS XTM, UnixTM, LinuxTM, FreeBSDTM, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling a smart terminal, **characterized in that**, the method is applied in a smart home and comprises:
determining (S11) that a first smart terminal is currently located around a local terminal; and
sending (S12) a parameter control instruction to a predetermined second smart terminal when the first smart terminal is located in a predetermined safe region according to a predetermined parameter setting, wherein the predetermined second smart terminal is one or more smart electrical appliances;
wherein sending a parameter control instruction to the predetermined second smart terminal according to a predetermined parameter setting, when the first smart terminal is located in a predetermined safe region comprises:
when the first smart terminal is located in the predetermined safe region, sending the parameter control instruction to the predetermined second smart terminal according to current time information and current environment information.

2. The method according to claim 1, wherein determining a smart terminal currently around a local terminal comprises:
sending (S21) a detection signal to surroundings;
receiving (S22) a response signal returned from the smart terminal according to the detection signal; and
determining (S23) a distance between the smart terminal and the local terminal and a type of the smart terminal according to the response signal returned from the smart terminal.

3. The method according to claim 1, wherein sending a parameter control instruction to the predetermined smart terminal according to a predetermined parameter setting, when the smart terminal is located in a predetermined safe region comprises:
obtaining a predetermined operation corresponding to the smart terminal when the smart terminal is located in the predetermined safe region; and
sending the parameter control instruction to the predetermined smart terminal corresponding to the predetermined operation.

4. The method according to claim 1, wherein determining a smart terminal currently around a local terminal comprises:
detecting (S41) a relative position of the local terminal in a space; and
determining (S42) the smart terminal currently around the local terminal according to a fixed position of the smart terminal in the space.

5. The method according to claim 4, wherein detecting a relative position of the local terminal in a space comprises:
sending a locating signal to a routing device providing network resources for the local terminal and all smart terminals; and
receiving the relative position of the local terminal in the space returned from the routing device;
wherein the relative position comprises a position with respect to the routing device and/or a position with respect to one or more of the smart terminals.

6. The method according to claim 4 or 5, wherein determining the smart terminal currently around the local terminal according to a fixed position of the smart terminal in the space comprises:
when the relative position of the local terminal in the space is the position with respect to the routing device, determining the smart terminal currently around the local terminal according to fixed positions of the smart terminal and the routing device in the space;
when the relative position of the terminal in the space is the position with respect to the smart terminal, determining the smart terminal currently around the local terminal according to a distance between each of the smart terminals and the terminal.

7. The method according to claim 4 or 5, wherein determining the smart terminal currently around the local terminal according to a fixed position of the smart terminal in the space comprises:
receiving a confirmation response returned from the routing device after sending the locating signal to the routing device, the confirmation response comprising information regarding the smart terminal currently around the local terminal.

8. The method according to claim 1, further comprising:
recording (S504) a control action of sending the parameter control instruction to the predetermined second smart terminal;
sending the parameter control instruction to the predetermined second smart terminal.

9. An apparatus for controlling a smart terminal, **characterized in that**, the apparatus is applied in a smart home and comprises:
a determining module (91) configured to determine that a first smart terminal is currently located around a local terminal;
the apparatus further comprises:
an instruction sending module (92) configured, when the first smart terminal is located in a predetermined safe region, to send a parameter control instruction to a predetermined smart terminal according to a predetermined parameter setting, wherein the predetermined second smart terminal is one or more smart electrical appliances;
wherein sending a parameter control instruction to the predetermined smart terminal according to a predetermined parameter setting, when the first smart terminal is located in a predetermined safe region comprises:
when the smart terminal is located in the predetermined safe region, sending the parameter control instruction to the smart terminal or the predetermined smart terminal according to current time information and current environment information.

10. The apparatus according to claim 9, wherein the determining module comprises:
a sending unit (911) configured to send a detection signal to surroundings;
a receiving unit (912) configured to receive a response signal returned from the smart terminal according to the detection signal;
an analyzing unit (913) configured to determine a distance between the smart terminal and the local terminal and a type of the smart terminal according to the response signal returned from the smart terminal.

11. The apparatus according to claim 9, wherein the determining module comprises:
a detecting unit (911') configured to detect a relative position of the local terminal in a space; and
an analyzing unit (912') configured to determine the smart terminal currently around the local terminal according to a fixed position of the smart terminal in the space.

12. The apparatus according to claim 11, wherein the detecting unit is configured to send a locating signal to a routing device providing network resources for the terminal and all smart terminals and to receive the relative position of the terminal in the space returned from the routing device;
wherein the relative position comprises a position with respect to the routing device and/or a position with respect to one or more of the smart terminals.

13. The apparatus according to claim 9, wherein the apparatus further comprises:
a recording module configured to record a control action of sending the parameter control instruction to the predetermined second smart terminal; the instruction sending module is configured to send the parameter control instruction to the predetermined second smart terminal according to the recorded control action.

14. An apparatus for controlling a smart terminal, the apparatus is applied in a smart home and comprises:
a processor (1002); and
a memory (1004) for storing instructions executable by the processor;
wherein the processor is configured to perform:
determining that a first smart terminal is currently located around a local terminal;
and
sending a parameter control instruction to a predetermined second smart terminal when the smart terminal is located in a predetermined safe region, according to a predetermined parameter setting, wherein the predetermined second smart terminal is one or more smart electrical appliances;
wherein sending a parameter control instruction to the smart terminal or a predetermined smart terminal according to a predetermined parameter setting, when the smart terminal is located in a predetermined safe region comprises:
when the first smart terminal is located in the predetermined safe region, sending the parameter control instruction to predetermined second smart terminal according to current time information and current environment information.

15. A computer program, which when executing on a processor of apparatus, performs a method according to anyone of claims 1 to 8.

## Patentansprüche

1. Verfahren zum Steuern eines intelligenten Endgeräts, **dadurch gekennzeichnet, dass** das Verfahren in intelligenter Haustechnik angewendet wird und Folgendes beinhaltet:
Feststellen (S11), dass sich ein erstes intelligentes Endgerät aktuell in der Nähe eines lokalen Endgeräts befindet; und
Senden (S12) eines Parametersteuerbefehls zu einem vorbestimmten zweiten intelligenten Endgerät, wenn sich das erste intelligente Endgerät in einer vorbestimmten sicheren Region gemäß einer vorbestimmten Parametereinstellung befindet, wobei das vorbestimmte zweite intelligente Endgerät ein oder mehrere intelligente Elektrogeräte ist;
wobei das Senden eines Parametersteuerbefehls zu dem vorbestimmten zweiten intelligenten Endgerät gemäß einer vorbestimmten Parametereinstellung, wenn sich das erste intelligente Endgerät in einer vorbestimmten sicheren Region befindet, Folgendes beinhaltet:
Senden, wenn sich das erste intelligente Endgerät in der vorbestimmten sicheren Region befindet, des Parametersteuerbefehls zu dem vorbestimmten zweiten intelligenten Endgerät gemäß aktuellen Zeitinformationen und aktuellen Umgebungsinformationen.

2. Verfahren nach Anspruch 1, wobei das Feststellen eines intelligenten Endgeräts, das sich aktuell in der Nähe eines lokalen Endgeräts befindet, Folgendes beinhaltet:
Senden (S21) eines Erkennungssignals in die Umgebung;
Empfangen (S22) eines von dem intelligenten Endgerät gemäß dem Erkennungssignal zurückgesendeten Antwortsignals; und
Feststellen (S23) einer Distanz zwischen dem intelligenten Endgerät und dem lokalen Endgerät und eines Typs des intelligenten Endgeräts anhand des von dem intelligenten Endgerät zurückgesendeten Antwortsignals.

3. Verfahren nach Anspruch 1, wobei das Senden eines Parametersteuerbefehls zu dem vorbestimmten intelligenten Endgerät gemäß einer vorbestimmten Parametereinstellung, wenn sich das intelligente Endgerät in einer vorbestimmten sicheren Region befindet, Folgendes beinhaltet:
Einholen einer vorbestimmten Operation entsprechend dem intelligenten Endgerät, wenn sich das intelligente Endgerät in der vorbestimmten sicheren Region befindet; und
Senden des Parametersteuerbefehls zu dem vorbestimmten intelligenten Endgerät entsprechend der vorbestimmten Operation.

4. Verfahren nach Anspruch 1, wobei das Feststellen eines intelligenten Endgeräts, das sich aktuell in der Nähe eines lokales Endgeräts befindet, Folgendes beinhaltet:
Erkennen (S41) einer relativen Position des lokalen Endgeräts in einem Raum; und
Feststellen (S42) des intelligenten Endgeräts, das sich aktuell in der Nähe des lokalen Endgeräts befindet, anhand einer festen Position des intelligenten Endgeräts in dem Raum.

5. Verfahren nach Anspruch 4, wobei das Erkennen einer relativen Position des lokalen Endgeräts in einem Raum Folgendes beinhaltet:
Senden eines Ortungssignals zu einem Routing-Gerät, das Netzwerkressourcen für das lokale Endgerät und für alle intelligenten Endgeräte bereitstellt; und
Empfangen der von dem Routing-Gerät zurückgesendeten relativen Position des lokalen Endgeräts in dem Raum;
wobei die relative Position eine Position mit Bezug auf das Routing-Gerät und/oder eine Position mit Bezug auf ein oder mehrere der intelligenten Endgeräte umfasst.

6. Verfahren nach Anspruch 4 oder 5, wobei das Feststellen des intelligenten Endgeräts, das sich aktuell in der Nähe des lokalen Endgeräts befindet, gemäß einer festen Position des intelligenten Endgeräts in dem Raum Folgendes beinhaltet:
Feststellen, wenn die relative Position des lokalen Endgeräts in dem Raum die Position mit Bezug auf das Routing-Gerät ist, des intelligenten Endgeräts, das sich aktuell in der Nähe des lokalen Endgeräts befindet, anhand von festen Positionen des intelligenten Endgeräts und des Routing-Geräts in dem Raum;
Feststellen, wenn die relative Position des Endgeräts in dem Raum die Position mit Bezug auf das intelligente Endgerät ist, des intelligenten Endgeräts, das sich aktuell in der Nähe des lokalen Endgeräts befindet, anhand einer Distanz zwischen jedem der intelligenten Endgeräte und dem Endgerät.

7. Verfahren nach Anspruch 4 oder 5, wobei das Feststellen des intelligenten Endgeräts, das sich aktuell in der Nähe des lokalen Endgeräts befindet, anhand einer festen Position des intelligenten Endgeräts in dem Raum Folgendes beinhaltet:
Empfangen einer von dem Routing-Gerät nach dem Senden des Ortungssignals zu dem Routing-Gerät zurückgesendeten Bestätigungsantwort, wobei die Bestätigungsantwort Informationen über das intelligente Endgerät umfasst, das sich aktuell in der Nähe des lokalen Endgeräts befindet.

8. Verfahren nach Anspruch 1, das ferner Folgendes beinhaltet:
Aufzeichnen (S504) einer Steueraktion des Sendens des Parametersteuerbefehls zu dem vorbestimmten zweiten intelligenten Endgerät;
Senden des Parametersteuerbefehls zu dem vorbestimmten zweiten intelligenten Endgerät.

9. Vorrichtung zum Steuern eines intelligenten Endgeräts, **dadurch gekennzeichnet, dass** die Vorrichtung in intelligenter Haustechnik benutzt wird und Folgendes umfasst:
ein Feststellungsmodul (91), konfiguriert zum Feststellen, dass sich ein erstes intelligentes Endgerät aktuell in der Nähe eines lokalen Endgeräts befindet;
wobei die Vorrichtung ferner Folgendes umfasst:
ein Befehlssendemodul (92), konfiguriert, wenn sich das erste intelligente Endgerät in einer vorbestimmten sicheren Region befindet, zum Senden eines Parametersteuerbefehls zu einem vorbestimmten intelligenten Endgerät gemäß einer vorbestimmten Parametereinstellung, wobei das vorbestimmte zweite intelligente Endgerät ein oder mehrere intelligente Elektrogeräte ist;
wobei das Senden eines Parametersteuerbefehls zu dem vorbestimmten intelligenten Endgerät gemäß einer vorbestimmten Parametereinstellung, wenn sich das erste intelligente Endgerät in einer vorbestimmten sicheren Region befindet, Folgendes beinhaltet:
Senden, wenn sich das intelligente Endgerät in der vorbestimmten sicheren Region befindet, des Parametersteuerbefehls zu dem intelligenten Endgerät oder dem vorbestimmten intelligenten Endgerät gemäß einer aktuellen Zeitinformation und einer aktuellen Umgebungsinformation.

10. Vorrichtung nach Anspruch 9, wobei das Feststellungsmodul Folgendes umfasst:
eine Sendeeinheit (911), konfiguriert zum Senden eines Erkennungssignals in die Umgebung;
eine Empfangseinheit (912), konfiguriert zum Empfangen eines von dem intelligenten Endgerät gemäß dem Erkennungssignal zurückgesendeten Antwortsignals;
eine Analysiereinheit (913), konfiguriert zum Feststellen einer Distanz zwischen dem intelligenten Endgerät und dem lokalen Endgerät und eines Typs des intelligenten Endgeräts anhand des von dem intelligenten Endgerät zurückgesendeten Antwortsignals.

11. Vorrichtung nach Anspruch 9, wobei das Feststellungsmodul Folgendes umfasst:
eine Erkennungseinheit (911'), konfiguriert zum Erkennen einer relativen Position des lokalen Endgeräts in einem Raum; und
eine Analysiereinheit (912'), konfiguriert zum Feststellen des intelligenten Endgeräts, das sich aktuell in der Nähe des lokalen Endgeräts befindet, anhand einer festen Position des intelligenten Endgeräts in dem Raum.

12. Vorrichtung nach Anspruch 11, wobei die Erkennungseinheit zum Senden eines Ortungssignals zu einem Routing-Gerät konfiguriert ist, das Netzwerkressourcen für das Endgerät und für alle intelligenten Endgeräte bereitstellt und die vom Routing-Gerät zurückgesendete relative Position des Endgeräts in dem Raum empfängt;
wobei die relative Position eine Position mit Bezug auf das Routing-Gerät und/oder eine Position mit Bezug auf ein oder mehrere der intelligenten Endgeräte umfasst.

13. Vorrichtung nach Anspruch 9, wobei die Vorrichtung ferner Folgendes umfasst:
ein Aufzeichnungsmodul, konfiguriert zum Aufzeichnen einer Steueraktion des Sendens des Parametersteuerbefehls zu dem vorbestimmten zweiten intelligenten Endgerät; wobei das Befehlssendemodul zum Senden des Parametersteuerbefehls zu dem vorbestimmten zweiten intelligenten Endgerät gemäß der aufgezeichneten Steueraktion konfiguriert ist.

14. Vorrichtung zum Steuern eines intelligenten Endgeräts, wobei die Vorrichtung in intelligenter Haustechnik benutzt wird und Folgendes umfasst:
einen Prozessor (1002); und
einen Speicher (1004) zum Speichern von von dem Prozessor ausführbaren Befehlen;
wobei der Prozessor zum Ausführen von Folgendem konfiguriert ist:
Feststellen, dass sich ein erstes intelligentes Endgerät aktuell in der Nähe eines lokalen Endgeräts befindet; und
Senden eines Parametersteuerbefehls zu einem vorbestimmten zweiten intelligenten Endgerät, wenn sich das intelligente Endgerät in einer vorbestimmten sicheren Region befindet, gemäß einer vorbestimmten Parametereinstellung, wobei das vorbestimmte zweite intelligente Endgerät ein oder mehrere intelligente Elektrogeräte ist;
wobei das Senden eines Parametersteuerbefehls zu dem intelligenten Endgerät oder einem vorbestimmten intelligenten Endgerät gemäß einer vorbestimmten Parametereinstellung, wenn sich das intelligente Endgerät in einer vorbestimmten sicheren Region befindet, Folgendes beinhaltet:
Senden, wenn sich das erste intelligente Endgerät in der vorbestimmten sicheren Region befindet, des Parametersteuerbefehls zu dem vorbestimmten zweiten intelligenten Endgerät gemäß aktuellen Zeitinformationen und aktuellen Umgebungsinformationen.

15. Computerprogramm, das bei Ausführung auf einem Vorrichtungsprozessor ein Verfahren nach einem der Ansprüche 1 bis 8 ausführt.

## Revendications

1. Procédé de commande d'un terminal intelligent, **caractérisé en ce que** le procédé est appliqué dans une maison intelligente et comprend :
la détermination (S11) qu'un premier terminal intelligent est présentement situé près d'un terminal local ; et
l'envoi (S12) d'une instruction de commande de paramètre à un second terminal intelligent prédéterminé quand le premier terminal intelligent est situé dans une région sûre prédéterminée en fonction d'un réglage de paramètre prédéterminé, dans lequel le second terminal intelligent prédéterminé est un ou plusieurs appareils domestiques électriques intelligents ;
dans lequel l'envoi d'une instruction de commande de paramètre au second terminal intelligent prédéterminé en fonction d'un réglage de paramètre prédéterminé, quand le premier terminal intelligent est situé dans une région sûre prédéterminée comprend :
quand le premier terminal intelligent est situé dans la région sûre prédéterminée, l'envoi de l'instruction de commande de paramètre au second terminal intelligent prédéterminé en fonction d'informations de temps actuel et d'informations d'environnement actuel.

2. Procédé selon la revendication 1, dans lequel la détermination d'un terminal intelligent présentement situé près d'un terminal local comprend :
l'envoi (S21) d'un signal de détection aux alentours ;
la réception (S22) d'un signal de réponse renvoyé par le terminal intelligent en fonction du signal de détection ; et
la détermination (S23) d'une distance entre le terminal intelligent et le terminal local et d'un type du terminal intelligent en fonction du signal de réponse renvoyé par le terminal intelligent.

3. Procédé selon la revendication 1, dans lequel l'envoi d'une instruction de commande de paramètre au terminal intelligent prédéterminé conformément à un réglage de paramètre prédéterminé, quand le terminal intelligent est situé dans une région sûre prédéterminée comprend :
l'obtention d'une opération prédéterminée correspondant au terminal intelligent quand le terminal intelligent est situé dans la région sûre prédéterminée ; et
l'envoi de l'instruction de commande de paramètre au terminal intelligent prédéterminé correspondant à l'opération prédéterminée.

4. Procédé selon la revendication 1, dans lequel la détermination d'un terminal intelligent présentement situé près d'un terminal local comprend :
la détection (S41) d'une position relative du terminal local dans un espace ; et
la détermination (S42) du terminal intelligent présentement près du terminal local en fonction d'une position fixe du terminal intelligent dans l'espace.

5. Procédé selon la revendication 4, dans lequel la détection d'une position relative du terminal local dans un espace comprend :
l'envoi d'un signal de localisation à un dispositif de routage fournissant des ressources de réseau au terminal local et à tous les terminaux intelligents, et
la réception de la position relative du terminal local dans l'espace renvoyé par le dispositif de routage ;
dans lequel la position relative comprend une position relativement au dispositif de routage et/ou une position relativement à un ou plusieurs des terminaux intelligents.

6. Procédé selon la revendication 4 ou 5, dans lequel la détermination du terminal intelligent présentement près du terminal local en fonction d'une position fixe du terminal intelligent dans l'espace comprend :
quand la position relative du terminal local dans l'espace est la position relativement au dispositif de routage, la détermination du terminal intelligent présentement près du terminal local en fonction de positions fixes du terminal local et du dispositif de routage dans l'espace ;
quand la position relative du terminal dans l'espace est la position relativement au terminal intelligent, la détermination du terminal intelligent présentement près du terminal local en fonction d'une distance entre chacun des terminaux intelligents et le terminal.

7. Procédé selon la revendication 4 ou 5, dans lequel la détermination du terminal intelligent présentement près du terminal local en fonction d'une position fixe du terminal intelligent dans l'espace comprend :
la réception d'une réponse de confirmation renvoyée par le dispositif de routage après l'envoi du signal de localisation au dispositif de routage, la réponse de confirmation comprenant des informations concernant le terminal intelligent présentement près du terminal local.

8. Procédé selon la revendication 1, comprenant en outre :
l'enregistrement (S504) d'une action de commande consistant à envoyer l'instruction de commande de paramètre au second terminal intelligent prédéterminé ;
l'envoi de l'instruction de commande de paramètre au second terminal intelligent prédéterminé.

9. Appareil de commande d'un terminal intelligent, **caractérisé en ce que** l'appareil est appliqué dans une maison intelligente et comprend :
un module de détermination (91) configuré pour déterminer qu'un premier terminal intelligent est présentement situé près d'un terminal local ;
l'appareil comprenant en outre :
un module d'envoi d'instruction (92) configuré pour envoyer, quand le premier terminal intelligent est situé dans une région sûre prédéterminée en fonction d'un réglage de paramètre prédéterminé, une instruction de commande de paramètre à un terminal intelligent prédéterminé en fonction d'un réglage de paramètre prédéterminé, dans lequel le second terminal intelligent prédéterminé est un ou plusieurs appareils domestiques électriques intelligents ;
dans lequel l'envoi d'une instruction de commande de paramètre au terminal intelligent prédéterminé en fonction d'un réglage de paramètre prédéterminé, quand le premier terminal intelligent est situé dans une région sûre prédéterminée comprend :
quand le terminal intelligent est situé dans la région sûre prédéterminée, l'envoi de l'instruction de commande de paramètre au terminal intelligent ou au terminal intelligent prédéterminé en fonction d'informations de temps actuel et d'informations d'environnement actuel.

10. Appareil selon la revendication 9, dans lequel le module de détermination comprend :
une unité d'envoi (911) configurée pour envoyer un signal de détection aux alentours ;
une unité de réception (912) configurée pour recevoir un signal de réponse renvoyé par le terminal intelligent en fonction du signal de détection ;
une unité d'analyse (913) configurée pour déterminer une distance entre le terminal intelligent et le terminal local et un type du terminal intelligent en fonction du signal de réponse renvoyé par le terminal intelligent.

11. Appareil selon la revendication 9, dans lequel le module de détermination comprend :
une unité de détection (911') configurée pour détecter une position relative du terminal local dans un espace ; et
une unité d'analyse (912') configurée pour déterminer le terminal intelligent présentement près du terminal local en fonction d'une position fixe du terminal intelligent dans l'espace.

12. Appareil selon la revendication 11, dans lequel l'unité de détection est configurée pour envoyer un signal de localisation à un dispositif de routage fournissant des ressources de réseau au terminal local et à tous les terminaux intelligents, et recevoir la position relative du terminal local dans l'espace renvoyé par le dispositif de routage ;
dans lequel la position relative comprend une position relativement au dispositif de routage et/ou une position relativement à un ou plusieurs des terminaux intelligents.

13. Appareil selon la revendication 9, l'appareil comprenant en outre :
un module d'enregistrement configuré pour enregistrer une action de commande d'envoi de l'instruction de commande de paramètre au second terminal intelligent prédéterminé ; le module d'envoi d'instruction est configuré pour envoyer l'instruction de commande de paramètre au second terminal intelligent prédéterminé en fonction de l'action de commande enregistrée.

14. Appareil de commande d'un terminal intelligent, l'appareil étant appliqué dans une maison intelligente et comprenant :
un processeur (1002) ; et
une mémoire (1004) destinée à mémoriser des instructions exécutables par le processeur ;
dans lequel le processeur est configuré pour :
déterminer qu'un premier terminal intelligent est présentement situé près d'un terminal local ; et
envoyer une instruction de commande de paramètre à un second terminal intelligent prédéterminé quand le premier terminal intelligent est situé dans une région sûre prédéterminée, en fonction d'un réglage de paramètre prédéterminé, dans lequel le second terminal intelligent prédéterminé est un ou plusieurs appareils domestiques électriques intelligents ;
dans lequel l'envoi d'une instruction de commande de paramètre au second terminal intelligent prédéterminé en fonction d'un réglage de paramètre prédéterminé, quand le premier terminal intelligent est situé dans une région sûre prédéterminée comprend :
quand le premier terminal intelligent est situé dans la région sûre prédéterminée, l'envoi de l'instruction de commande de paramètre au second terminal intelligent prédéterminé en fonction d'informations de temps actuel et d'informations d'environnement actuel.

15. Programme informatique qui, à son exécution sur un processeur de l'appareil, exécute un procédé selon l'une quelconque des revendications 1 à 8.
